# EUROPEAN PATENT APPLICATION

(11) **EP 4 803 408 A2**
(43) Date of publication of application: **09.09.2026**
(21) Application number: 26193658.7
(22) Date of filing: 17.05.2022
(51) Int. Cl.: B62D 25/10

(54) **ELECTRIC WORK VEHICLE**

(30) Priority: 29.06.2021 JP 2021107500
(62) Document number(s) of the earlier application(s) in accordance with Art. 76 EPC: 22832630.2 / 4 364 987
(71) Applicant: KUBOTA CORPORATION, Osaka-shi, Osaka 530-0011 (JP)
(72) Inventor: YAMAGUCHI, Tatsuya, Sakai-shi, Osaka, 590-0823 (JP); OBATA, Norio, Sakai-shi, Osaka, 590-0823 (JP); MORIOKA, Yasuaki, Sakai-shi, Osaka, 590-0823 (JP); MITSUI, Haruki, Sakai-shi, Osaka, 590-0823 (JP)
(74) Representative: Cabinet Beau de Loménie

(57) **Abstract**

An electric work vehicle includes: a battery (4); a motor configured to be driven by electric power supplied from the battery (4); a travel device configured to be driven by the motor; a cover member (12) covering the battery (4); and a first support part (81) supported by the battery (4), wherein the cover member (12) is supported by the first support part (81) while being swingable about a horizontal axis (Q) relative to the first support part (81), and is configured to enable opening and closing by swinging about the horizontal axis (Q), and the first support part (81) is supported by a side portion of the battery (4).

## Description

### Technical Field

The present invention relates to an electric work vehicle including a battery, a motor configured to be driven by electric power supplied from the battery, and a travel device configured to be driven by the motor.

### Background Art

The electric work vehicle described in Patent Document 1 is known as an example of the above-described electric work vehicle. The electric work vehicle (a "tractor" in Patent Document 1) includes a cover member covering a battery (a "travel battery" in Patent Document 1). The cover member is configured to enable opening and closing by swinging about a horizontal axis (an "opening and closing axis" in Patent Document 1).

### Prior Art Document

### Patent Document

Patent Document 1: JP 2021-953A

### Disclosure of the Invention

### Problem to be Solved by the Invention

Patent Document 1 dose not specifically describe a support structure of the cover member. Here, for example, a configuration can be envisaged in which a support frame extending in an up-down direction is provided rearward of the battery, and the cover member is supported at an upper end portion of the support frame while being swingable about the horizontal axis.

However, this configuration requires that a relatively large space be secured rearward of the battery in order to provide a support frame that is sufficiently robust to stably support the cover member. This tends to reduce the size of the battery that can be mounted in the work vehicle. Consequently, the capacity of the battery tends to be reduced.

An object of the present invention is to provide an electric work vehicle that does not require a space to be secured rearward of a battery in order to install a support frame that supports a cover member, and that enables the cover member to be stably supported.

### Means for Solving Problem

A feature of the present invention lies in an electric work vehicle including: a battery; a motor configured to be driven by electric power supplied from the battery; a travel device configured to be driven by the motor; a cover member covering the battery; and a first support part supported by the battery, wherein the cover member is supported by the first support part while being swingable about a horizontal axis relative to the first support part, and is configured to enable opening and closing by swinging about the horizontal axis, and the first support part is supported by a side portion of the battery.

With this configuration, the cover member is supported by the first support part supported by a side portion of the battery. Accordingly, a support frame for supporting the cover member need not be provided rearward of the battery. In addition, the battery can be disposed closer to the driving section, and it is therefore possible to secure a large space for installing the battery. Accordingly, it is possible to increase the size and capacity of the battery, and also to achieve an improved layout.

In general, a side portion of a battery is more robust to a force acting vertically downward than a top plate portion of the battery. Also, with this configuration, the cover member is supported by a side portion of the battery via the first support part. Accordingly, the cover member can be stably supported as compared with a configuration in which the cover member is supported by the top plate portion of the battery.

Therefore, with this configuration, a space for installing the support frame that supports the cover member need not be secured rearward of the battery, and it is possible to realize an electric work vehicle that enables the cover member to be stably supported.

Furthermore, in the present invention, it is preferable that the electric work vehicle further includes a second support part attached to the side portion of the battery, wherein the first support part is supported by the side portion of the battery via the second support part.

With this configuration, a configuration in which the cover member is supported by a side portion of the battery is readily realized in a reliable manner, using a relatively simple structure. Therefore, with this configuration, a space for installing the support frame for supporting the cover member need not be secured rearward of the battery, and an electric work vehicle that enables the cover member to be stably supported can be easily and reliably realized using a relatively simple structure.

Furthermore, in the present invention, it is preferable that the second support part is attached to a hanging part for hanging the battery, the hanging part being provided on the side portion of the battery.

In general, a hanging part for hanging a battery has high strength. Therefore, with this configuration, the second support part is stably supported. Thus, the cover member is stably supported.

Furthermore, in the present invention, it is preferable that the second support part has a gate shape straddling an upper end face of the battery, a lower end portion of the second support part is attached to the side portion of the battery, and the electric work vehicle further includes a gap provided between the upper end face of the battery and the second support part.

With this configuration, a gap is provided between an upper end face of the battery and the second support part, and, therefore, no load is exerted on the upper end face of the battery from the second support part. Accordingly, it is possible to prevent the load of the cover member from being exerted on the upper end face of the battery via the second support part.

Moreover, with this configuration, a situation where the second support part impedes heat dissipation from the upper end face of the battery is less likely to occur than with a configuration in which the upper end face of the battery and the second support part are in contact with each other. That is, with this configuration, heat dissipation from the battery is likely to suitably occur.

Furthermore, in the present invention, it is preferable that the electric work vehicle further includes a stepped portion provided on the side portion of the battery, wherein the second support part is attached to the stepped portion.

With this configuration, the second support part is supported by the stepped portion, which tends to have relatively high strength. Accordingly, the side portion of the battery receives, in a direction in which its strength is secured, a force exerted from above. Therefore, the second support part is stably supported. Thus, the cover member is stably supported.

Furthermore, in the present invention, it is preferable that the electric work vehicle further includes: a driving section configured to allow an operator to ride in the driving section; and a third support part provided between the driving section and the battery, wherein the third support part supports an electric component of the driving section, and is supported by the battery.

With this configuration, an electric component of the driving section is supported by the battery via the third support part. Thus, the electric component of the driving section is likely to be stably supported.

Furthermore, in the present invention, it is preferable that the electric work vehicle further includes: a driving section configured to allow an operator to ride in the driving section; and a third support part provided between the driving section and the battery, wherein the third support part supports an electric component of the driving section, and is supported by the battery, and the second support part and the third support part are coupled to each other.

With this configuration, the second support part and the third support part are reinforced by each other as a result of the second support part and the third support part being coupled to each other. Thus, the cover member and the electric component of the driving section are stably supported.

### Brief Description of the Drawings

FIG. 1 is a right side view of a tractor.
FIG. 2 is a partially cutaway right side view showing configurations of a cover member and so forth.
FIG. 3 is a partially cutaway front view showing configurations of a travel battery and so forth.
FIG. 4 is a partially cutaway front view showing configurations of a first support part and so forth.
FIG. 5 is a plan view showing configurations of the first support part and so forth.
FIG. 6 is an exploded perspective view showing an attachment structure of a second support part.
FIG. 7 is a partially cutaway front view showing configurations of a travel battery and so forth according to another embodiment (2).

### Best Mode for Carrying out the Invention

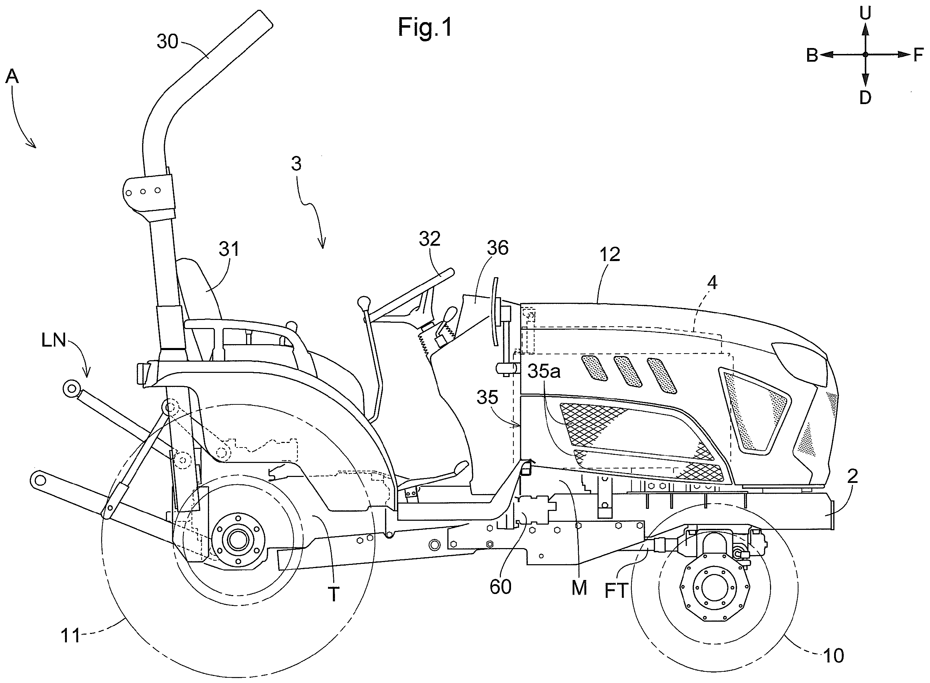

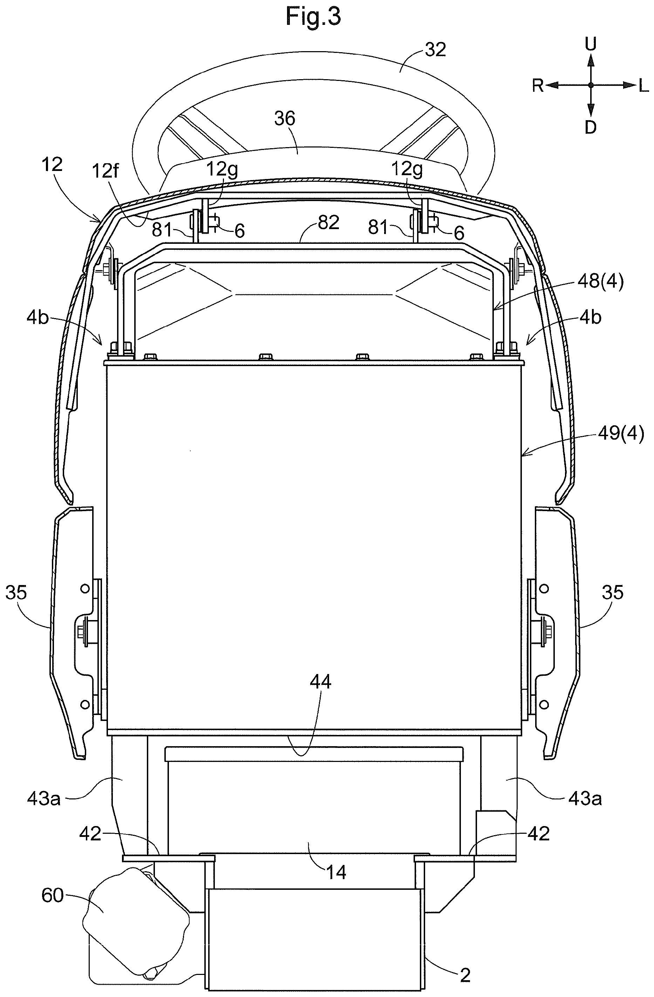

An embodiment for carrying out the present invention will be described with reference to the drawings. In the following description, the arrow F shown in FIGS. 1, 2, 5, and 6 indicates the "forward direction", the arrow B indicates the "rearward direction", the arrow L shown in FIGS. 3 to 7 indicates the "leftward direction", and the arrow R indicates the "rightward direction". The arrow U shown in FIGS. 1 to 4, 6, and 7 indicates the "upward direction", and the arrow D indicates the "downward direction".

### Overall Configuration of Tractor

As shown in FIG. 1, a tractor A (corresponding to an "electric work vehicle" according to the present invention) includes left and right front wheels 10 (each corresponding to a "travel device" according to the present invention), left and right rear wheels 11 (each corresponding to a "travel device" according to the present invention), and a cover member 12.

In addition, the tractor A includes a body frame 2 and a driving section 3.

The body frame 2 is supported by the left and right front wheels 10 and the left and right rear wheels 11.

The cover member 12 is disposed at a front portion of the body. Also, the driving section 3 is provided rearward of the cover member 12.

The driving section 3 includes a protection frame 30, a driver's seat 31, and a steering wheel 32. An operator can sit on the driver's seat 31. This enables the operator to ride in the driving section 3. The left and right front wheels 10 can be steered by operating the steering wheel 32. The operator can perform various driving operations in the driving section 3.

That is, the tractor A includes a driving section 3 configured to allow the operator to ride in the driving section 3.

In addition, the tractor A includes a travel battery 4 (corresponding to a "battery" according to the present invention), a motor M, a transmission device T, and a front transmission mechanism FT.

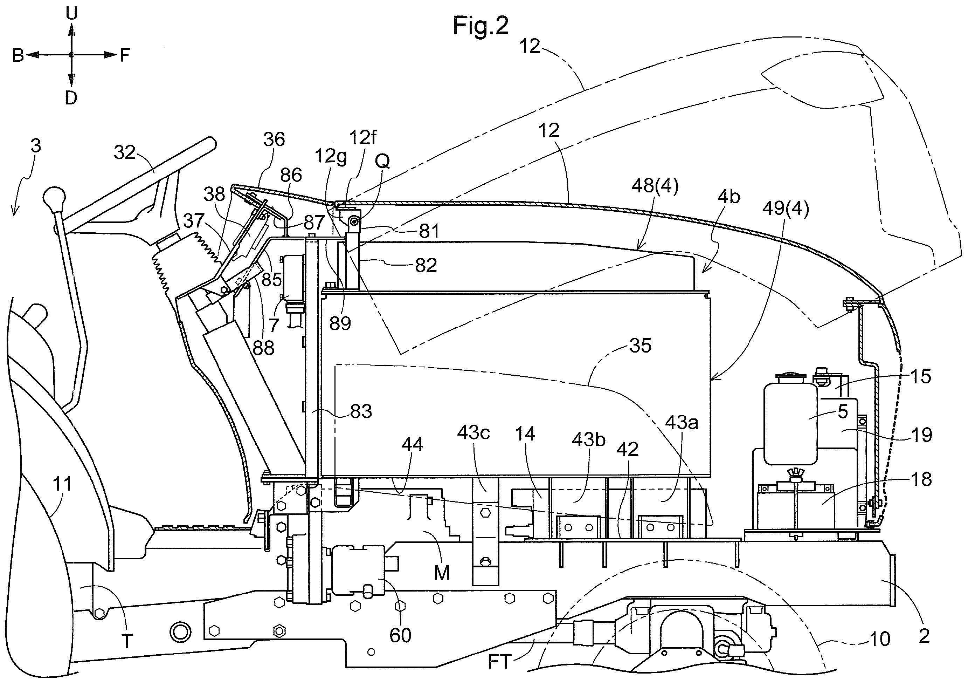

The cover member 12 is configured to swing about an opening and closing axis Q (see FIG. 2) (corresponding to a "horizontal axis" according to the present invention) extending in a left-right direction of the body. Thus, the cover member 12 is configured to enable opening and closing. Also, while the cover member 12 is closed, the travel battery 4 is covered by the cover member 12. That is, the tractor A includes a cover member 12 covering the travel battery 4. Also, the travel battery 4 supplies electric power to the motor M.

The motor M is disposed below the travel battery 4. Also, the motor M is driven by the electric power supplied from the travel battery 4. The driving force of the motor M is transmitted to the transmission device T.

The transmission device T is on the rear side of the travel battery 4 and is disposed rearward of the motor M. The front transmission mechanism FT extends forward from the transmission device T. The transmission device T changes the speed of the driving force received from the motor M, and transmits the resulting driving force to the left and right rear wheels 11. The driving force is transmitted from the transmission device T to the left and right front wheels 10 as well via the front transmission mechanism FT. Thus, the left and right front wheels 10 and the left and right rear wheels 11 are driven.

That is, the tractor A includes the travel battery 4, and a motor M configured to be driven by the electric power supplied from the travel battery 4. In addition, the tractor A includes left and right front wheels 10 and left and right rear wheels 11 that are configured to be driven by the motor M.

As shown in FIG. 1, a link mechanism LN is provided at a rear section of the tractor A. For example, a work device (not shown) such as a cultivator device can be coupled to the link mechanism LN.

The transmission device T is configured to transmit, to the work device, some of the driving force received from the motor M. Thus, the work device is driven.

With the above-described configuration, the tractor A can perform work using the work device while traveling using the left and right front wheels 10 and the left and right rear wheels 11.

As shown in FIG. 1, the tractor A also includes a hydraulic pump 60. The hydraulic pump 60 is provided on a right side portion of the body. The hydraulic pump 60 is driven by the driving force from the motor M. Also, the hydraulic pump 60 supplies a hydraulic fluid to various parts of the body.

Left and right side covers 35 are provided at a front portion of the body of the tractor A. Each side cover 35 includes a grille 35a through which air can pass. A lower left rear portion and a lower right rear portion of the cover member 12 are cut out conforming to outer shapes of the side covers 35.

### Configuration of Front Portion of Body

As shown in FIG. 2, the tractor A includes a reserve tank 5, an inverter 14, a radiator 15, an auxiliary device battery 18, and a voltage converter 19. While the cover member 12 is closed, the reserve tank 5, the radiator 15, the auxiliary device battery 18, and the voltage converter 19 are covered by the cover member 12.

The inverter 14 is disposed below the travel battery 4. The inverter 14 converts direct-current power supplied from the travel battery 4 into alternating-current power, and supplies the alternating-current power to the motor M.

The reserve tank 5 can store cooling water.

The radiator 15 and a water pump (not shown) are provided on a cooling water path of the tractor A. As a result of the water pump pumping cooling water, the cooling water is circulated along the cooling water path. Then, the cooling water is cooled by passing through the radiator 15.

The auxiliary device battery 18 supplies electric power to various types of auxiliary devices. Also, electric power is transmitted from the travel battery 4 to the voltage converter 19. The voltage converter 19 steps down the electric power supplied from the travel battery 4, and supplies the resulting electric power to the auxiliary device battery 18.

As shown in FIG. 2, the travel battery 4 and the inverter 14 are supported by the body frame 2.

More specifically, as shown in FIG. 2, an inverter support part 42 is supported by the body frame 2. The inverter support part 42 is a horizontally oriented plate-shaped member. The inverter 14 is placed on the inverter support part 42.

As shown in FIG. 2, a first support frame 43a and a second support frame 43b are supported by the inverter support part 42. A third support frame 43c is supported by the body frame 2. Also, a battery support part 44 is supported by the first support frame 43a, the second support frame 43b, and the third support frame 43c. The battery support part 44 is a horizontally oriented plate-shaped member. In addition, the battery support part 44 extends across left and right ends of the travel battery 4. The travel battery 4 is placed on the battery support part 44.

The reserve tank 5, the radiator 15, the auxiliary device battery 18, and the voltage converter 19 are also supported by the body frame 2.

### Stepped Portion

As shown in FIGS. 2 and 3, the travel battery 4 includes an upper battery portion 48 and a lower battery portion 49. The upper battery portion 48 is located above the lower battery portion 49.

As shown in FIG. 2, the length of the lower battery portion 49 in the front-rear direction is longer than the length of the upper battery portion 48 in the front-rear direction. As shown in FIG. 3, the length of the lower battery portion 49 in the left-right direction is longer than the length of the upper battery portion 48 in the left-right direction. Therefore, as shown in FIGS. 2 and 3, a stepped portion 4b is formed between the upper battery portion 48 and the lower battery portion 49.

The stepped portion 4b extends all the way around the travel battery 4. In other words, the stepped portion 4b extends across front, rear, left, and right side portions of the travel battery 4.

In this manner, the stepped portion 4b is provided at side portions of the travel battery 4.

### Frame Part and Coupling Part

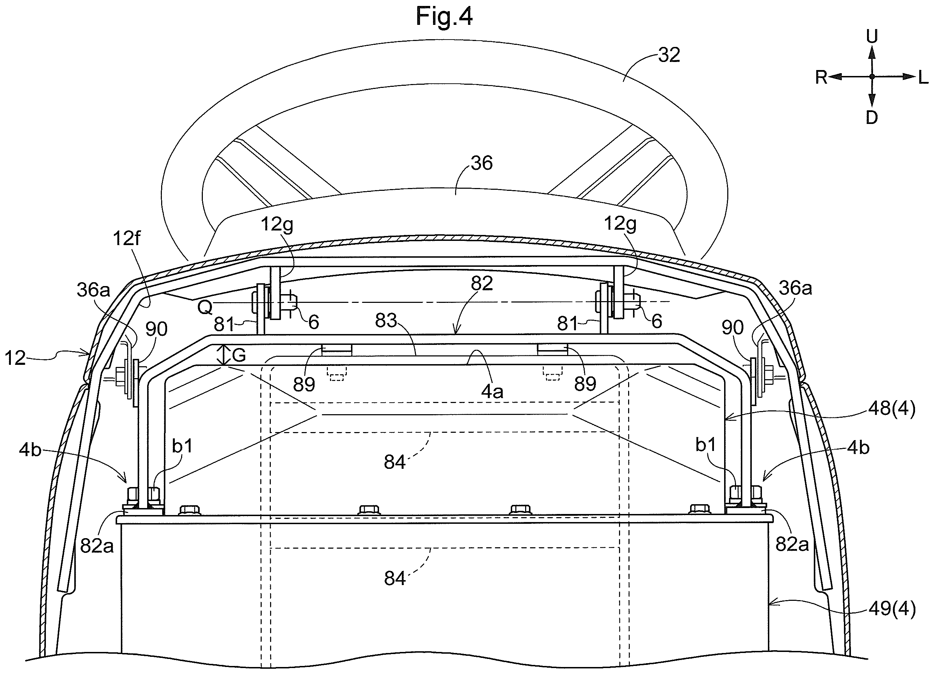

As shown in FIGS. 3 and 4, the cover member 12 includes a frame part 12f having a gate shape in a front view, and at least one coupling part 12g. The frame part 12f is provided on the inner wall side of the cover member 12. The coupling part 12g protrudes downward from a lower surface of an upper end portion of the frame part 12f.

In the present embodiment, two coupling parts 12g are provided. However, the present invention is not limited thereto, and one coupling part 12g, or three or more coupling parts 12g may be provided.

### First Support Part and Second Support Part

As shown in FIGS. 3 and 4, the tractor A includes at least one first support part 81 and a second support part 82.

As shown in FIGS. 4 to 6, the second support part 82 has a gate shape straddling an upper end face 4a of the travel battery 4. As shown in FIG. 4, a gap G is provided between the upper end face 4a of the travel battery 4 and the second support part 82. The second support part 82 is attached to the stepped portion 4b.

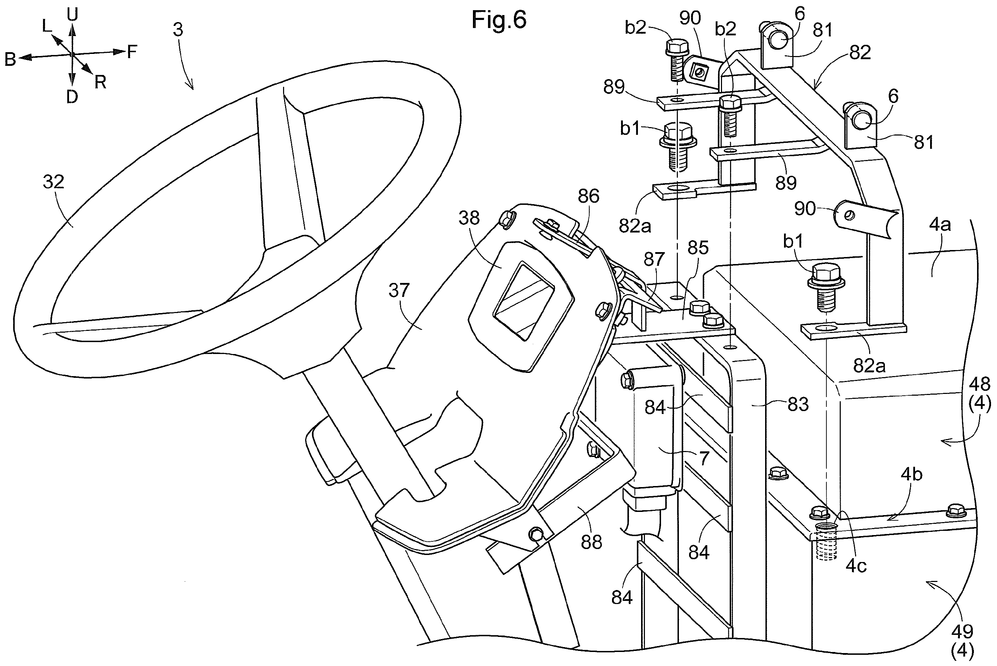

More specifically, as shown in FIG. 6, the stepped portion 4b is provided with at least one hanging part 4c. The hanging part 4c is a bolt hole used for hanging the travel battery 4. Although FIG. 6 shows a hanging part 4c formed in a rear right portion of travel battery 4, hanging parts 4c are also formed in a front right portion, a front left portion, and a rear left portion of the travel battery 4.

Attachment parts 82a are provided at left and right lower end portions, respectively, of the second support part 82. Each attachment part 82a has a horizontally oriented plate shape.

As shown in FIG. 6, the right attachment part 82a is attached, using a first bolt b1, to the hanging part 4c formed in the rear right portion of the travel battery 4. The left attachment part 82a is attached, using a first bolt b1, to the hanging part 4c formed in the rear left portion of the travel battery 4.

That is, the second support part 82 is attached to the hanging parts 4c for hanging the travel battery 4 that are provided on side portions of the travel battery 4. With the above-described configuration, lower end portions of the second support part 82 are attached to side portions of the travel battery 4.

In this manner, the tractor A includes a second support part 82 attached to side portions of the travel battery 4.

As shown in FIGS. 4 to 6, each first support part 81 extends upward from an upper surface of an upper end portion of the second support part 82. That is, the first support parts 81 are supported by side portions of the travel battery 4 via the second support part 82.

In the present embodiment, two first support parts 81 are provided. However, the present invention is not limited thereto, and one first support part 81, or three or more first support parts 81 may be provided.

In this manner, the tractor A includes at least one first support part 81 supported by the travel battery 4. Also, the first support part 81 is supported by a side portion of the travel battery 4.

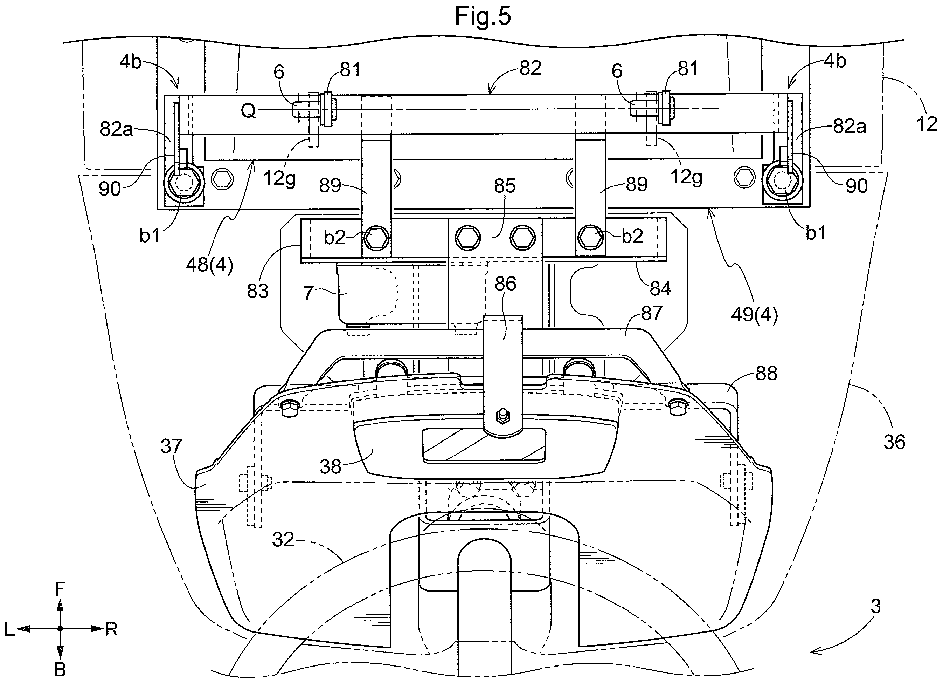

As shown in FIGS. 4 and 5, the right first support part 81 and the right coupling part 12g are coupled to each other via a pin 6 while being rotatable about the opening and closing axis Q relative to each other. Also, the left first support part 81 and the left coupling part 12g are coupled to each other via a pin 6 while being rotatable about the opening and closing axis Q relative to each other.

Thus, the cover member 12 is supported by the left and right first support parts 81 while being swingable about the opening and closing axis Q relative to the left and right first support parts 81.

That is, the cover member 12 is supported by the first support parts 81 while being swingable about the opening and closing axis Q relative to the first support parts 81, and is configured to enable opening and closing by swinging about the opening and closing axis Q.

### Third Support Part

As shown in FIGS. 2, 5, and 6, a panel part 37 and a display device 38 (corresponding to an "electric component" according to the present invention) are provided at a front portion of the driving section 3. The display device 38 is attached to the panel part 37. The display device 38 can display various types of information.

As shown in FIGS. 4 to 6, a third support part 83 is provided between the driving section 3 and the travel battery 4. As shown in FIG. 2, the third support part 83 is supported by the body frame 2. The third support part 83 extends in the up-down direction of the body. Also, as shown in FIGS. 4 to 6, the third support part 83 has a gate shape.

In this manner, the tractor A includes a third support part 83 provided between the driving section 3 and the travel battery 4.

As shown in FIGS. 2, 5, and 6, a first support stay 85 is coupled to an upper surface of the third support part 83. The first support stay 85 extends rearward from the third support part 83.

In addition, a second support stay 86 extends upward from an upper surface of the first support stay 85. A third support stay 87 is coupled to an intermediate portion of the second support stay 86. The third support stay 87 extends in the left-right direction.

As shown in FIG. 2, a rear portion of the first support stay 85 extends downward and rearward. Also, a fourth support stay 88 is coupled to a rear portion of the first support stay 85. The fourth support stay 88 extends in the left-right direction. Left and right end portions of the fourth support stay 88 are bent downward and rearward.

An upper portion of the panel part 37 is attached to a left end portion and a right end portion of the third support stay 87. A lower portion of the panel part 37 is attached to a left end portion and a right end portion of the fourth support stay 88. That is, the panel part 37 is supported by the third support part 83 via the first support stay 85, the second support stay 86, the third support stay 87, and the fourth support stay 88.

With this configuration, the display device 38 is supported by the third support part 83 via the panel part 37, the first support stay 85, the second support stay 86, the third support stay 87, and the fourth support stay 88.

As shown in FIGS. 4 to 6, at least one coupling stay 89 extends rearward from the lower surface of the upper end portion of the second support part 82. A rear end portion of the coupling stay 89 is coupled, using a second bolt b2, to an upper end portion of the third support part 83. That is, the second support part 82 is coupled to the third support part 83 via the coupling stay 89.

In the present embodiment, two left and right coupling stays 89 are provided. However, the present invention is not limited thereto, and one coupling stay 89, or three or more coupling stays 89 may be provided.

With this configuration, the second support part 82 and the third support part 83 are coupled to each other. In addition, the third support part 83 is supported by the travel battery 4 via the coupling stays 89 and the second support part 82.

That is, the third support part 83 supports the display device 38 in the driving section 3, and is supported by the travel battery 4.

As shown in FIGS. 4 to 6, a plurality of lateral frames 84 are attached to the third support part 83. The lateral frames 84 extend in the left-right direction. The lateral frames 84 are attached to the third support part 83 from the rear side.

An electronic control unit 7 is attached to a lateral frame 84. Thus, the electronic control unit 7 is supported by the third support part 83 via the lateral frame 84. The electronic control unit 7 controls various parts of the tractor A.

### Front Cover Part

As shown in FIGS. 2 and 5, the tractor A includes a front cover part 36. The front cover part 36 is located rearward of the cover member 12. The front cover part 36 covers the electronic control unit 7 and the third support part 83. In addition, the front cover part 36 covers an outer edge portion of the panel part 37.

As shown in FIG. 4, two left and right inner attachment parts 36a are provided on the inner wall side of the front cover part 36. As shown in FIGS. 4 to 6, cover attachment stays 90 are coupled to a left end portion and a right end portion, respectively, of the second support part 82. Each of the cover attachment stays 90 extends rearward and upward from the second support part 82.

The left inner attachment part 36a is attached to the left cover attachment stay 90. The right inner attachment part 36a is attached to the right cover attachment stay 90.

With this configuration, the front cover part 36 is supported by the travel battery 4 via the cover attachment stays 90 and the second support part 82.

As shown in FIGS. 2 and 5, the front cover part 36 is attached to an upper end portion of the second support stay 86. Thus, the front cover part 36 is supported by the travel battery 4 via the second support stay 86, the first support stay 85, the third support part 83, the coupling stays 89, and the second support part 82.

With the above-described configuration, the cover member 12 is supported by the first support parts 81 supported by side portions of the travel battery 4. Accordingly, a support frame for supporting the cover member 12 need not be provided rearward of the travel battery 4. In addition, the travel battery 4 can be disposed closer to the driving section 3, and it is therefore possible to secure a large space for installing the travel battery 4. Accordingly, it is possible to increase the size and capacity of the travel battery 4, and also to achieve an improved layout.

In general, a side portion of a battery such as the travel battery 4 is more robust to a force acting vertically downward than a top plate portion of the battery. Also, with the above-described configuration, the cover member 12 is supported by side portions of the travel battery 4 via the first support parts 81. Accordingly, the cover member 12 can be stably supported as compared with a configuration in which the cover member 12 is supported by a top plate portion of the travel battery 4.

Therefore, with the above-described configuration, a space for installing the support frame for supporting the cover member 12 need not be secured rearward of the travel battery 4, and it is possible to realize a tractor A that enables the cover member 12 to be stably supported.

### Other Embodiments

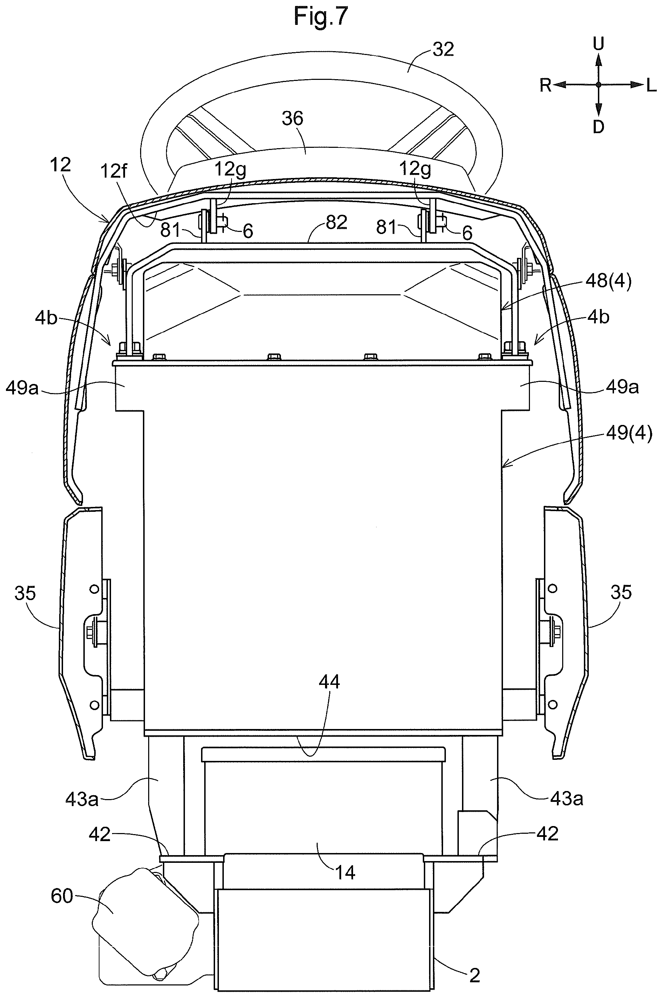

(1) The tractor A may be configured as a hybrid tractor including an engine.
(2) As shown in FIG. 7, a protruding portion 49a protruding in the lateral direction of the body may be provided at an upper end portion of the lower battery portion 49. In this configuration, the stepped portion 4b is formed between the upper battery portion 48 and the protruding portion 49a. In the example shown in FIG. 7, the protruding portion 49a protrudes outward of the left and right ends of the upper battery portion 48 in the left-right direction of the body. In the example shown in FIG. 7, a part of the lower battery portion 49 that is located below the protruding portion 49a has the same length in the left-right direction as the length of the upper battery portion 48 in the left-right direction.
(3) The first support part 81 may be directly supported by a side portion of the travel battery 4 without the second support part 82 interposed therebetween.
(4) The second support part 82 may be attached to a part of a side portion of the travel battery 4 other than the hanging parts 4c.
(5) The upper end face 4a of the travel battery 4 and the second support part 82 may be in contact with each other. That is, the gap G need not be provided between the upper end face 4a of the travel battery 4 and the second support part 82.
(6) The second support part 82 may be attached to a part of a side portion of the travel battery 4 other than the stepped portion 4b. For example, the second support part 82 may be attached to a side surface of the travel battery 4. The stepped portion 4b need not be provided on a side portion of the travel battery 4.
(7) The coupling stays 89 need not be provided. That is, the second support part 82 and the third support part 83 need not be coupled to each other. The third support part 83 need not be supported by the travel battery 4.
(8) Positions of some or all of the members may be inverted in the left-right direction.
(9) The opening and closing axis Q need not extend in the left-right direction of the body. For example, the opening and closing axis Q may extend in the front-rear direction of the body.

Note that the configurations disclosed in the embodiments described above (including the alternative embodiments; the same applies to the following) are applicable in combination with configurations disclosed in other embodiments so long as no inconsistency arises. The embodiments disclosed herein are illustrative, and embodiments of the present invention are not limited thereto. Appropriate changes and modifications may be made without departing from the scope and sprit of the present invention.

### Industrial Applicability

The present invention is applicable not only to a tractor, but also to various electric work vehicles such as a combine, a rice planter, and a construction machine.

### Description of Reference Signs

3: Driving section
4: Travel battery (battery)
4a: Upper end face
4b: Stepped portion
4c: Hanging part
10: Front wheel (travel device)
11: Rear wheel (travel device)
12: Cover member
38: Display device (electric component)
81: First support part
82: Second support part
83: Third support part
A: Tractor (electric work vehicle)
G: Gap
M: Motor
Q: Opening and closing axis (horizontal axis)

## Claims

1. An electric work vehicle (A) comprising:
a body;
a battery (4);
a motor (M) configured to be driven by electric power supplied from the battery (4);
a travel device (10, 11) configured to be driven by the motor (M);
a cover member (12) covering the battery (4) and configured to be opened and closed; and
a support part (81, 82) supporting the cover member (12),
wherein the support part (81, 82) includes a first support part (81) supporting the cover member (12), and a second support part (82) attached to the battery (4),
the second support part (82) is in contact with an upper end face (4a) of the battery (4), and
the first support part (81) extends upward from the second support part (82).

2. The electric work vehicle (A) according to claim 1, wherein the second support part (82) has two end portions, each of which is in contact with the battery (4).

3. The electric work vehicle (A) according to claim 1 or 2, wherein
the battery (4) includes an upper battery portion (48) and a lower battery portion (49),
the battery (4) is provided with a stepped portion (4b) between the upper battery portion (48) and the lower battery portion (49) on a side face of the battery (4),
the lower battery portion (48) has a greater length in a front-rear direction of the body than the upper battery portion (49), and
the lower battery portion (48) has a greater length in a left-right direction of the body than the upper battery portion (49).

4. The electric work vehicle (A) according to any one of claims 1 to 3, wherein the cover member (12) is swingable about an axis extending in a left-right direction.

5. The electric work vehicle (A) according to any one of claims 1 to 4, further comprising a front cover part (36) disposed rearward of the cover member (12) and configured to cover a part of the body from above,
wherein the front cover part (36) overlaps a rear end portion of the battery (4) in plan view.

6. The electric work vehicle (A) according to claim 5, wherein the second support part (82) is disposed below an upper end of the front cover part (36).

7. The electric work vehicle (A) according to any one of claims 1 to 6, further comprising a radiator (15),
wherein the radiator (15) is disposed forward of the battery (4) and is covered by the cover member (12) in its closed position.
